# EUROPEAN PATENT APPLICATION

(11) **EP 2 862 679 A1**
(43) Date of publication of application: **22.04.2015**
(21) Application number: 12879555.6
(22) Date of filing: 19.06.2012
(51) Int. Cl.: B25J 17/02, B25J 9/06

(54) **ROBOTIC SYSTEM AND METHOD FOR MANUFACTURING PROCESSED GOODS**

(71) Applicant: Kabushiki Kaisha Yaskawa Denki, Kitakyushu-shi, Fukuoka 806-0004 (JP)
(72) Inventor: NOGAMI, Kazuyoshi, Kitakyushu-shi Fukuoka 806-0004 (JP); NAKAMURA, Tamio, Kitakyushu-shi Fukuoka 806-0004 (JP); NISHIMURA, Takashi, Kitakyushu-shi Fukuoka 806-0004 (JP); SUYAMA, Takashi, Kitakyushu-shi Fukuoka 806-0004 (JP); MIYAUCHI, Nobukazu, Kitakyushu-shi Fukuoka 806-0004 (JP)
(74) Representative: Grünecker Patent- und Rechtsanwälte PartG mbB
(86) International application number: PCT/JP2012/065633
(87) International publication number: WO 2013/190639

(57) **Abstract**

Addressed is a reduction in disadvantages attributable to the avoidance of a singular point. For this purpose, a robot system according to embodiments includes a robot including an arm, and a work table. On the work table, an object used for work performed by the robot by using the arm is placed. The arm of the robot includes a first arm portion, a second arm portion, and a third arm portion. The first arm portion supports an end effector to be rotatable about a first rotation axis at a distal end thereof. The second arm portion supports a base end of the first arm portion to be swingable about a second rotation axis perpendicular to the first rotation axis. The third arm portion supports a base end of the second arm portion to be swingable about a third rotation axis perpendicular to the second rotation axis.

## Description

### Field

Disclosed embodiments relate to a robot system and a method for manufacturing a processed product. Background

Conventionally, a multi-joint robot that includes a plurality of articulated shafts has a position referred to as a singular point. Specifically, the singular point is a posture (rotational position of each articulated shaft) in which the solution of inverse kinematics calculation, which obtains an angle of each articulated shaft from the position and posture of a distal end of the robot, is indeterminate.

Consequently, there have been a variety of methods developed to avoid the robot from being in a singularity posture (for example, see Patent Literature 1).

### Citation List

### Patent Literature

Patent Literature 1: Japanese Patent Application Laid-open No. 2005-329521

### Summary

### Technical Problem

Even when the singularity-avoidance method as disclosed in Patent Literature 1 is used, however, the workability of the robot may deteriorate near the position of the singular point because of the need to avoid the singular point.

Meanwhile, in recent years, along with the diversification in the use applications of robots, situations in which the robot is compelled to operate in a posture close to the singular point have been increasing. Thus, required is the reduction in disadvantages attributable to the avoidance of the singular point.

One aspect of the embodiments, in view of the foregoing situations, aims to provide a robot system and a method for manufacturing a processed product that can reduce the disadvantages attributable to the avoidance of the singular point.

### Solution to Problem

A robot system according to an aspect of embodiment includes a robot including an arm, and a work table. On the work table, an object used for work performed by the robot by using the arm is placed. The arm of the robot includes a first arm portion, a second arm portion, and a third arm portion. The first arm portion supports an end effector to be rotatable about a first rotation axis at a distal end thereof. The second arm portion supports a base end of the first arm portion to be swingable about a second rotation axis perpendicular to the first rotation axis. The third arm portion supports a base end of the second arm portion to be swingable about a third rotation axis perpendicular to the second rotation axis.

### Advantageous Effects of Invention

In accordance with one aspect of the embodiments, the disadvantages attributable to the avoidance of the singular point can be reduced.

### Brief Description of Drawings

FIG. 1 is a diagram illustrating the configuration of a robot system according to a first embodiment.
FIG. 2 is a diagram illustrating the configuration of a robot.
FIG. 3 is a diagram illustrating the configuration of axes of a wrist portion.
FIG. 4A is a diagram illustrating a singularity posture of an RBT robot.
FIG. 4B is a diagram illustrating a singularity posture of the robot in the first embodiment.
FIG. 5 is a diagram illustrating an example of behavior in delivery work.
FIG. 6A is a diagram illustrating another example of behavior in the delivery work.
FIG. 6B is a diagram illustrating another example of behavior in the delivery work.
FIG. 6C is a diagram illustrating another example of behavior in the delivery work.
FIG. 7A is a diagram illustrating an example of behavior in agitation work.
FIG. 7B is a diagram illustrating another example of behavior in the agitation work.
FIG. 8A is a diagram illustrating an example of behavior in scraping work.
FIG. 8B is a diagram illustrating the example of behavior in the scraping work.
FIG. 9 is a diagram illustrating an example of behavior in work performed by a robot according to a second embodiment.

### Description of Embodiments

With reference to the accompanying drawings, the following describes in detail exemplary embodiments of a robot system and a method for manufacturing a processed product disclosed in the present application. Note that the invention is not intended to be limited by the following embodiments.

The following description defines, to clarify the positional relation, an X axis, a Y axis, and a Z axis that are orthogonal to one another. Furthermore, an X axis positive direction is defined as a horizontal forward direction, and a Z axis positive direction is defined as a vertical upward direction.

### First Embodiment

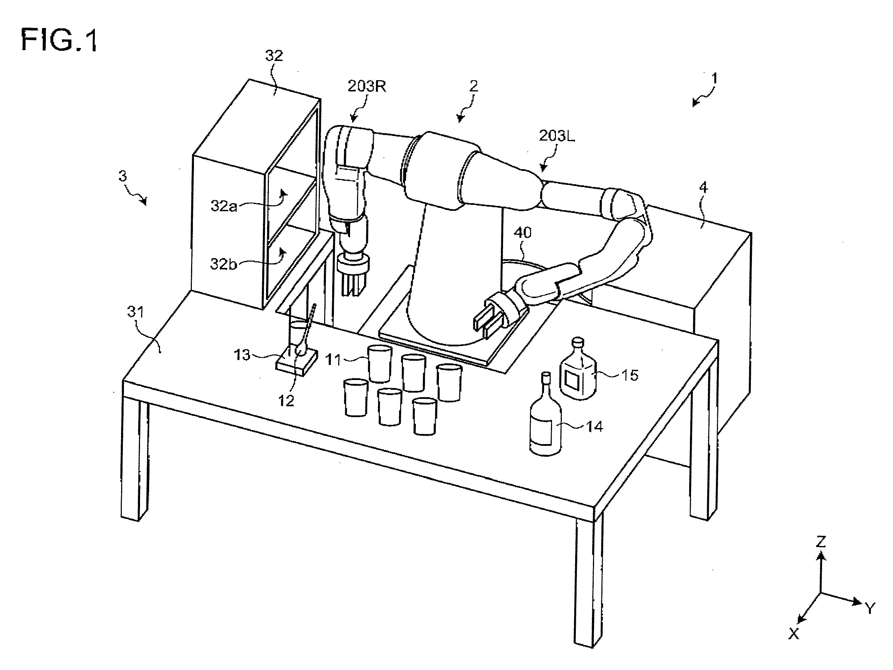

FIG. 1 is a diagram illustrating the configuration of a robot system according to a first embodiment. As illustrated in FIG. 1, a robot system 1 in the first embodiment includes a robot 2, a work table 3, and a control device 4. In the robot system 1, the robot 2 performs a variety of types of work by using various objects placed on the work table 3 in accordance with instructions given by the control device 4.

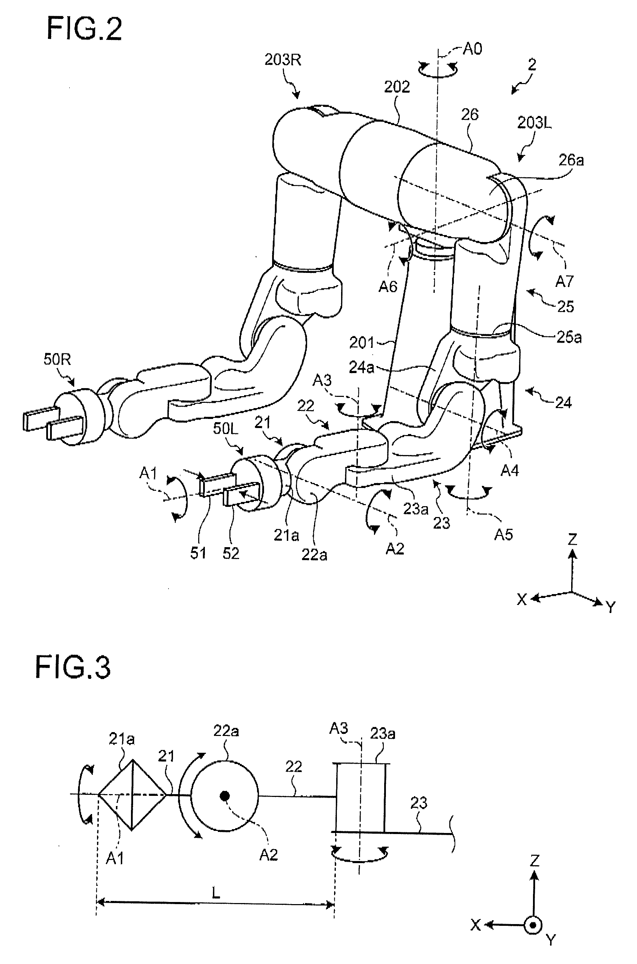

The robot 2 is a dual-arm robot provided with a left arm 203L and a right arm 203R. The robot 2 performs the work by using these arms 203L and 203R. The specific configuration of the robot 2 will be described later with reference to FIG. 2.

On the work table 3, various objects, which are used for the work performed by the robot 2 by using the arms 203L and 203R, are placed. Examples of those placed on a top plate 31 of the work table 3 include glasses 11 (corresponding to examples of a container), a stirrer 12 (corresponding to an example of an elongated member), a holding stand 13 that holds the stirrer 12 in an upright state, and bottles 14 and 15 containing liquid.

Furthermore, on the top plate 31 of the work table 3, a shelf 32 is provided in an integrated manner. The shelf 32 is a storage portion for storing therein the glasses 11 in multiple stages in the up-and-down direction (vertical direction), for example. The interior of the shelf 32 is vertically partitioned by a partition plate, and in storage spaces 32a and 32b formed thereby, the glasses 11 and others are stored.

Note that the top plate 31 of the work table 3 and the bottom surfaces of the respective storage spaces 32a and 32b are all assumed to be horizontal.

The work table 3 is formed in a substantially U-shape and is arranged to surround the front and sides of the robot 2. The glasses 11, the stirrer 12, and the holding stand 13 are disposed in front of the robot 2, the bottles 14 and 15 are disposed on the left side of the robot 2, and the shelf 32 is disposed on the right side of the robot 2.

The control device 4 is a control device that controls the drive of the robot 2. The control device 4 is connected to the robot 2 via a cable 40.

More specifically, the control device 4 is connected to actuators provided at each joint portion of the robot 2 via the cable 40, and sends drive commands to the respective actuators via the cable 40. The robot 2 rotates the actuators at given angles individually in accordance with the drive commands from the control unit 4 and moves the arms 203L and 203R to any place in any posture.

As for the control device 4, a computer or the like provided with a storage device, an electronic arithmetic unit, and an input device can be used, for example. Furthermore, the cable 40 is a sheathed cable in which communication signal lines between the robot 2 and the control device 4 and power feeding lines that feed power to the actuators from a not-depicted power supply are bundled, for example.

In the robot system 1 thus configured, the robot 2 performs a variety of types of work according to the instructions given by the control unit 4. For example, the robot 2 performs "delivery work" of taking a glass 11 from the work table 3 or from the shelf 32, or placing a glass 11 on the work table 3 or on the shelf 32. The robot 2 further performs "agitation work" of shaking a held glass 11 so as to stir liquid inside, "scraping work" of scraping off deposit adhering to the inner wall of a glass 11 by using the stirrer 12, and others.

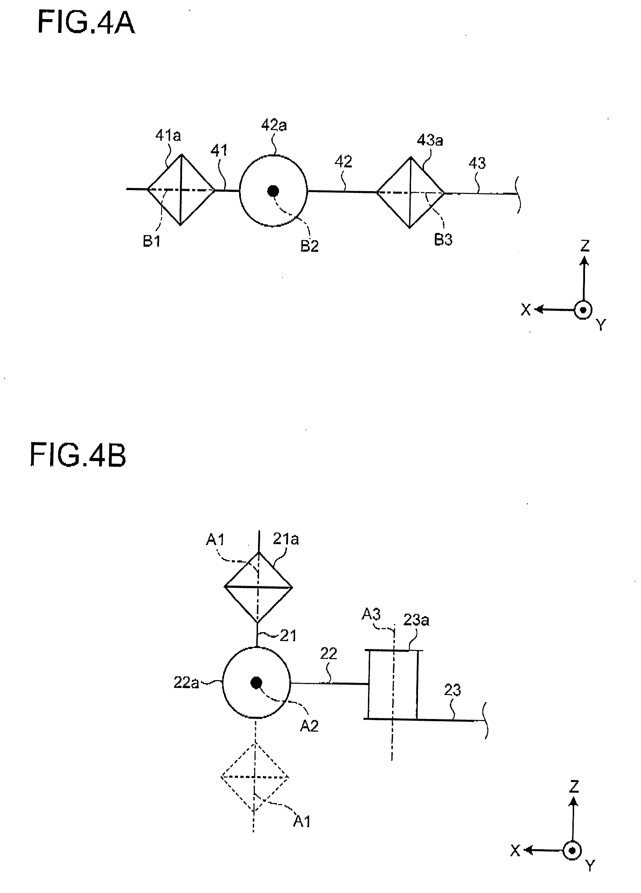

In a typical arm robot as illustrated in Patent Literature 1 (hereinafter, this robot is referred to as an RBT robot), the posture in which a wrist portion (three driving shafts on the distal end side) of the arm is fully extended (see FIG. 4A) is one of the singularity postures. Thus, it is difficult for this robot to hold objects placed on the work table by accessing from the horizontal direction in a continuous manner while avoiding the singular point, for example. Consequently, at the time of holding an object placed on the work table, the holding of the object is performed by accessing from above while the wrist portion thereof is in a state of being bent 90 degrees. Thus, depending on the content of work, taking a posture to avoid the singularity posture may result in reduced workability of the robot.

In contrast, the robot 2 in the first embodiment is configured with axial directions different from those of the RBT robot. Thus, the robot 2 in the first embodiment can easily perform horizontal access to an object placed on the work table 3. The following specifically describes the configuration of the robot 2 and a variety of types of work performed by the robot 2.

First, the configuration of the robot 2 will be described with reference to FIG. 2. FIG. 2 is a diagram illustrating the configuration of the robot 2. As illustrated in FIG. 2, the robot 2 is a dual-arm 7-axis robot. Specifically, the robot 2 includes a base 201, a body portion 202, the left arm 203L, and the right arm 203R.

The base 201 is a member to be fixed to an installation surface such as floor or ceiling in an upright state, and supports the body portion 202 to be rotatable about a vertical axis A0 that is parallel to the Z axis. The body portion 202 is rotatably supported at a base end thereof by the base 201, and rotatably supports the left arm 203L and the right arm 203R at the distal ends thereof.

The left arm 203L is an arm that is rotatably supported by a left shoulder joint portion of the body portion 202, and the right arm 203R is an arm that is rotatably supported by a right shoulder joint portion of the body portion 202.

Now, the configuration of the left arm 203L and the right arm 203R will be described. Because the left arm 203L and the right arm 203R have the same configuration in the first embodiment, the following describes only the configuration of the left arm 203L, and that of the right arm 203R will be omitted.

The left arm 203L includes a first arm portion 21, a second arm portion 22, a third arm portion 23, a fourth arm portion 24, a fifth arm portion 25, and a sixth arm portion 26.

The first arm portion 21 is an arm portion that supports an end effector 50L to be rotatable about a first rotation axis A1. The end effector 50L includes a pair of holding portions 51 and 52 facing each other, and by moving the holding portions 51 and 52 in a direction closer to each other, the end effector 50L holds an object disposed between the holding portions 51 and 52. Note that an end effector 50R provided on the right arm 203R has the same configuration as that of the end effector 50L.

A distal end (flange portion) 21a of the first arm portion 21 is a columnar member extending along the first rotation axis A1, and is formed such that the end effector 50L is detachable. Furthermore, the distal end 21a is provided with a first actuator not depicted, and by the first actuator, the end effector 50L rotates about the first rotation axis A1.

The pair of holding portions 51 and 52 of the end effector 50L is provided parallel to the first rotation axis A1.

The second arm portion 22 is an arm portion that supports a base end of the first arm portion 21 to be swingable about a second rotation axis A2 that is perpendicular to the first rotation axis A1. A joint portion 22a, which forms the second rotation axis A2, is formed by a region including a distal end of the second arm portion 22 and the base end of the first arm portion 21. The joint portion 22a is provided with a second actuator not depicted, and by the second actuator, the first arm portion 21 swings about the second rotation axis A2.

The third arm portion 23 is an arm portion that supports a base end of the second arm portion 22 to be swingable about a third rotation axis A3 that is substantially perpendicular to both the first rotation axis A1 and the second rotation axis A2. A joint portion 23a, which forms the third rotation axis A3, is formed by a region including a distal end of the third arm portion 23 and the base end of the second arm portion 22. The joint portion 23a is provided with a third actuator not depicted, and by the third actuator, the second arm portion 22 swings about the third rotation axis A3.

The wrist portion of the left arm 203L includes the first arm portion 21, the second arm portion 22, and the third arm portion 23.

The fourth arm portion 24 is an arm portion that supports the third arm portion 23 to be swingable about a fourth rotation axis A4 that is perpendicular to the third rotation axis A3. A joint portion 24a, which forms the fourth rotation axis A4, is formed by a region including a distal end of the fourth arm portion 24 and the base end of the third arm portion 23. Furthermore, the joint portion 24a is provided with a fourth actuator not depicted, and by the fourth actuator, the third arm portion 23 swings about the fourth rotation axis A4.

The fifth arm portion 25 is an arm portion that supports the fourth arm portion 24 to be rotatable about a fifth rotation axis A5 that is perpendicular to the fourth rotation axis A4. A joint portion 25a, which forms the fifth rotation axis A5, is formed by a region including a distal end of the fifth arm portion 25 and the base end of the fourth arm portion 24. Furthermore, the joint portion 25a is provided with a fifth actuator not depicted, and by the fifth actuator, the fourth arm portion 24 swings about the fifth rotation axis A5.

The sixth arm portion 26 is an arm portion that supports the fifth arm portion 25 to be swingable about a sixth rotation axis A6 that is perpendicular to the fifth rotation axis A5. A joint portion 26a, which forms the sixth rotation axis A6, is formed by a region including a distal end of the sixth arm portion 26 and the base end of the fifth arm portion 25. Furthermore, the sixth arm portion 26 is supported by the body portion 202 to be rotatable about a seventh rotation axis A7 that is perpendicular to the sixth rotation axis A6.

The joint portion 26a and the body portion 202 are provided with a sixth actuator and a seventh actuator 7, respectively, not depicted. By the sixth actuator, the fifth arm portion 25 swings about the sixth rotation axis A6, and by the seventh actuator, the sixth arm portion 26 rotates about the seventh rotation axis A7.

A basic posture (initial posture) of the robot 2 is set to the posture illustrated in FIG. 2 in the first embodiment. More specifically, when the posture of the robot 2 is in the basic posture, the fifth arm portion 25 is supported by the sixth arm portion 26 at a position in which the fifth rotation axis A5 is perpendicular to the seventh rotation axis A7, and the sixth arm portion 26 is supported by the body portion 202 at a position in which the fifth rotation axis A5 is facing vertically downward (Z axis negative direction).

Furthermore, when the posture of the robot 2 is in the basic posture, the third arm portion 23 is supported by the fourth arm portion 24 at a position in which the third rotation axis A3 is facing vertically upward, and the fourth arm portion 24 is supported by the fifth arm portion 25 at a position in which the joint portion 23a is facing toward the front.

Moreover, when the posture of the robot 2 is in the basic posture, the second arm portion 22 is supported by the third arm portion 23 at a position in which the joint portion 22a is facing toward the front, and the first arm portion 21 is supported by the second arm portion 22 at a position in which the distal end 21a is facing toward the front (X axis positive direction).

The body portion 202 is a base portion that rotatably supports the sixth arm portion 26 of the left arm 203L. Furthermore, the body portion 202 is also a base portion that rotatably supports the sixth arm portion 26 of the right arm 203R. In other words, the body portion 202 is the base portion common to the two arms 203L and 203R.

Furthermore, the body portion 202 is supported to be rotatable about the vertical axis A0 by the base 201. Consequently, rotating the body portion 202 about the vertical axis A0 enables the robot 2 to easily gain access to the shelf 32, the bottles 14 and 15, and others disposed lateral (Y axis direction) to the robot 2 illustrated in FIG. 2.

Next, the configuration of axes of the wrist portion composed of the first arm portion 21, the second arm portion 22, and the third arm portion 23 will be described with reference to FIG. 3. FIG. 3 is a diagram illustrating the configuration of the axes of the wrist portion. FIG. 3 schematically illustrates the first arm portion 21, the second arm portion 22, and the third arm portion 23 when the posture of the robot 2 is in the basic posture illustrated in FIG. 2.

As illustrated in FIG. 3, the first rotation axis A1 of the robot 2 in the first embodiment is perpendicular to the third rotation axis A3 in a posture in which a distance L from the base end of the second arm portion 22 to the distal end of the first arm portion 21 is maximized.

Here, "the posture in which the distance L from the base end of the second arm portion 22 to the distal end of the first arm portion 21 is maximized" is a posture in which the first arm portion 21 and the second arm portion 22 illustrated in FIG. 3 (the first arm portion 21 and the second arm portion 22 illustrated in FIG. 2 being represented as links connecting between the joints) are in a straight line. More specifically, it is a posture in which the extending direction of the distal end 21a of the first arm portion 21 (i.e., the direction of the first rotation axis A1) illustrated in FIG. 2 coincides with the extending direction of the second arm portion 22.

Note that "the posture in which the distance L from the base end of the second arm portion 22 to the distal end of the first arm portion 21 is maximized" is also "a posture in which the distance from the third rotation axis A3 to the distal end of the first arm portion 21 is maximized".

The third rotation axis A3 is provided perpendicular to the extending direction of the second arm portion 22. Consequently, the joint portion 22a located at the distal end of the second arm 22 swings about the third rotation axis A3. In contrast, in the RBT robot, the third rotation axis is provided parallel to the extending direction of the second arm portion. Thus, the joint portion located at the distal end of the second arm portion rotates about the third rotation axis at its place, that is, turns round on its own axis.

As in the foregoing, in the robot 2 in the first embodiment, the axial relation between the first rotation axis A1 and third rotation axis A3 is different from the axial relation between the first rotation axis and the third rotation axis in the RBT robot. Thus, the singularity posture of the robot 2 in the first embodiment is different from the singularity posture of the RBT robot.

Now, the difference in singularity posture between the robot 2 in the first embodiment and the RBT robot will be described with reference to FIGS. 4A and 4B. FIG. 4A is a diagram illustrating the singularity posture of the RBT robot, and FIG. 4B is a diagram illustrating the singularity posture of the robot 2 in the first embodiment.

In FIG. 4A, the rotation axis corresponding to the first rotation axis A1 is represented as a first rotation axis B1, the rotation axis corresponding to the second rotation axis A2 is represented as a second rotation axis B2, and the rotation axis corresponding to the third rotation axis A3 is represented as a third rotation axis B3. Furthermore, the members corresponding to the first arm portion 21, the second arm portion 22, and the third arm portion 23 are represented as a first arm portion 41, a second arm portion 42, and a third arm portion 43, respectively.

As illustrated in FIG. 4A, in the RBT robot, the third rotation axis B3 is provided parallel to the extending direction of the second arm portion 42. Consequently, when the first arm portion 41 and the second arm portion 42 are in a straight line, in other words, when the distance from the base end of the second arm portion 42 to the distal end of the first arm portion 41 is maximized, the first rotation axis B1 is parallel to the third rotating shaft B3 and the RBT robot is in the singularity posture.

Thus, for the RBT robot, because it is necessary to take a track that avoids the posture in which the first arm portion 41 and the second arm portion 42 are in a straight line, it has been difficult to perform any action that includes the posture in which the first arm portion 41 and the second arm portion 42 are in a straight line.

In contrast, in the robot 2 in the first embodiment, as illustrated in FIG. 4B, the third rotation axis A3 is provided perpendicularly to the extending direction of the second arm portion 22. Consequently, when the distal end 21a of the first arm portion 21 is disposed at a position perpendicular to the second arm portion 22, the first rotation axis A1 and the third rotation axis A3 are in parallel with each other and the robot 2 in the first embodiment is in a singularity posture.

As in the foregoing, the robot 2 in the first embodiment can shift the singular point to a position close to an upper limit (for example, +110 degrees) or a lower limit (for example, -110 degrees) of the movable range of the first arm portion 21.

As a consequence, even when the robot 2 in the first embodiment performs work that includes the posture in which the distance from the base end of the second arm portion 22 to the distal end of the first arm portion 21 is maximized, that is, the posture in which the first arm portion 21 and second arm portion 22 are in a straight line, the robot 2 can operate without being in the singularity posture.

Next, described are the "delivery work", "agitation work", and "scraping work" that the robot 2 in the first embodiment performs. These types of work are performed in accordance with instructions given by the control device 4 (see FIG. 1).

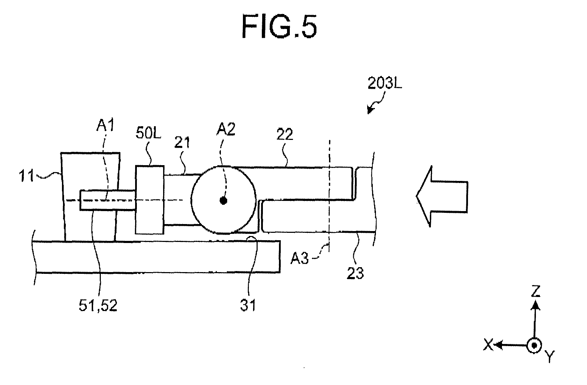

The "delivery work" will be described first with reference to FIG. 5. FIG. 5 is a diagram illustrating an example of behavior in the delivery work. The "delivery work" is the work of taking up the glass 11 placed on the top plate 31 of the work table 3 or placing the glass 11 on the top plate 31 of the work table 3.

The robot 2 performs the delivery of the glass 11 between the end effector 50L and the top plate 31 while going through the posture in which the first arm portion 21 and the second arm portion 22 are in a straight line, that is, the posture in which the distance from the base end of the second arm portion 22 to the distal end of the first arm portion 21 is maximized.

For example, as illustrated in FIG. 5, while being in the posture in which the first arm portion 21 and the second arm portion 22 are in a straight line, the robot 2 moves the first arm portion 21 and the second arm portion 22 in a substantially horizontal direction. Thus, the robot 2 makes the end effector 50L closer to the glass 11 from the lateral side of the glass 11, and then the robot 2 holds the glass 11 from the lateral side thereof by using the holding portions 51 and 52 of the end effector 50L.

As in the foregoing, because the posture in which the first arm portion 21 and the second arm portion 22 are in a straight line is not a singularity posture, the robot 2 can easily gain access to an object such as the glass 11 placed on the work table 3 from the lateral side thereof.

Meanwhile, in the RBT robot, because the posture in which the second arm portion and the first arm portion are in a straight line is the singularity posture, it is difficult for the RBT robot to gain access to an object placed on the work table from the lateral side thereof as is performed by the robot 2 in the first embodiment.

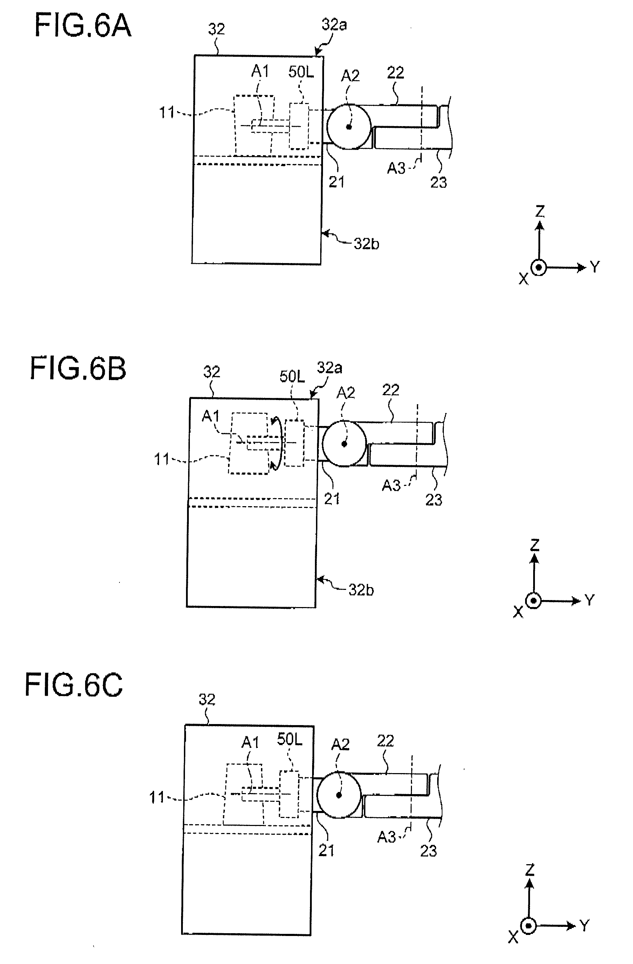

Next, other examples of delivery work will be described with reference to FIGS. 6A to 6C. FIGS. 6A to 6C are diagrams illustrating other examples of behavior in delivery work. In these examples of delivery work, performed are the behavior of storing the glass 11, which is held by the end effector 50L, in the shelf 32 and taking out the glass 11 from the shelf 32.

The robot 2 performs the delivery of the glass 11 between the end effector 50L and the shelf 32 while going through the posture in which the first arm portion 21 and the second arm portion 22 are in a straight line, that is, the posture in which the distance from the base end of the second arm portion 22 to the distal end of the first arm portion 21 is maximized.

For example, as illustrated in FIG. 6A, the robot 2 stores the glass 11 held by using the end effector 50L into the storage space 32a of the shelf 32. At this time, the robot 2 inserts the first arm portion 21 into the storage space 32a while going through the posture in which the distance from the base end of the second arm portion 22 to the distal end of the first arm portion 21 is maximized, that is, the posture in which the first arm portion 21 and the second arm portion 22 are in a straight line.

Thus, because the robot 2 can easily gain access from the lateral side, the robot 2 can easily access the space partitioned in the vertical direction such as the storage space 32a of the shelf 32.

Furthermore, as illustrated in FIG. 6B, the robot 2 performs the work of inverting the glass 11, which is stored in the shelf 32, within the storage space 32a and placing it on the storage space 32a again. Specifically, the robot 2 moves the first arm portion 21, which is in a posture of the first arm portion 21 and the second arm portion 22 being in a straight line, into the storage space 32a of the shelf 32, and holds the glass 11, which is inside the storage space 32a, by the end effector 50L from the horizontal direction.

Subsequently, after having slightly lifted the held glass 11 vertically upward, the robot 2 inverts the glass 11 by rotating the end effector 50L by 180 degrees about the first rotation axis A1. The robot 2 then moves the first arm portion 21 and the second arm portion 22 vertically downward, and places the inverted glass 11 in the storage space 32a again.

As in the foregoing, because the robot 2 can easily gain access from the lateral side, when rotating a held object about the first rotation axis A1, the radius of rotation of the object to rotate can be made small. Consequently, even in a narrow space such as the storage space 32a of the shelf 32, the robot 2 can rotate an object easily.

The robot 2 may invert the glass 11 while performing the behavior of moving the glass 11 vertically upward or vertically downward.

As illustrated in FIG. 6C, the robot 2 further performs the work of taking out the glass 11 stored in the shelf 32 from the storage space 32a. Specifically, as in the case of inverting the glass 11, the robot 2 holds the glass 11 inside the storage space 32a with the end effector 50L from the lateral side thereof. The robot 2 then takes out the held glass 11 from the storage space 32a by retracting the first arm portion 21 and the second arm portion 22 in the posture in which the distance from the base end of the second arm portion 22 to the distal end of the first arm portion 21 is maximized.

As in the foregoing, the robot 2 in the first embodiment can gain access from the horizontal direction in a state in which the first arm portion 21 and the second arm portion 22 are in a straight line, and thus can easily access the space the width of which in the vertical direction is relatively narrow, such as the shelf 32.

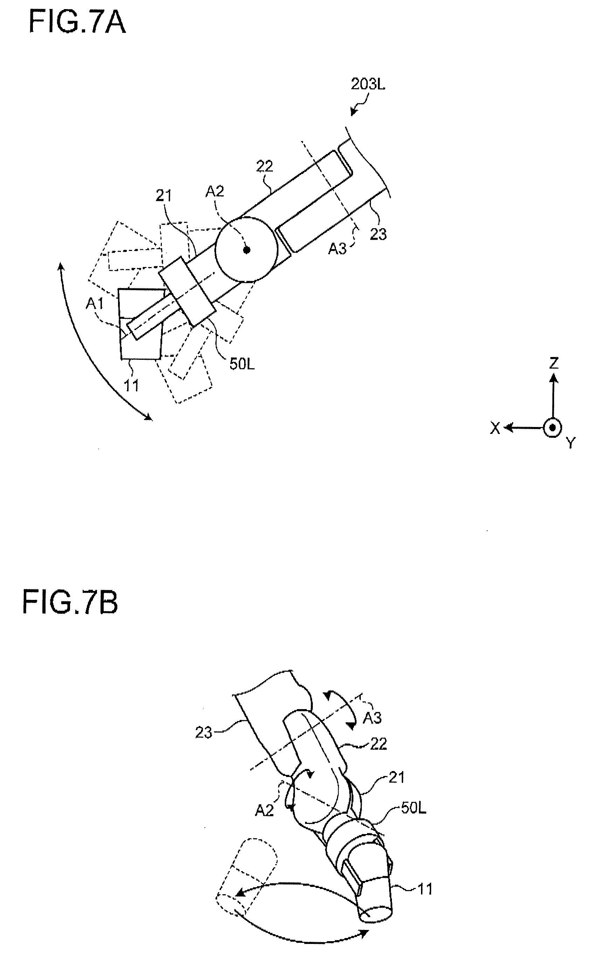

Next, the "agitation work" will be described with reference to FIG. 7A. FIG. 7A is a diagram illustrating an example of behavior in the agitation work. The "agitation work" is the work of shaking the glass 11 so as to agitate the liquid (corresponding to an example of processed product) inside.

In FIG. 7A, it is assumed that the robot 2 accesses the glass 11 from obliquely above and holds the glass 11 at an angle in the posture in which the first arm portion 21 and the second arm portion 22 are in a straight line, that is, the posture in which the distance from the base end of the second arm portion 22 to the distal end of the first arm portion 21 is maximized.

As illustrated in FIG. 7A, the robot 2 shakes the glass 11 by swinging the first arm portion 21 about the second rotation axis A2 in a positive direction (for example, upward) and in an opposite direction (for example, downward) so as to agitate the liquid inside the glass 11. The robot 2 performs this behavior while going through the posture in which the distance from the base end of the second arm portion 22 to the distal end of the first arm portion 21 is maximized.

The robot 2 can swing the first arm portion 21 in a range of -90 to 90 degrees with respect to the extending direction of the second arm portion 22 without being in a singularity posture. Thus, the robot 2 can easily perform the agitation work as illustrated in FIG. 7A.

Next, described is another example of the agitation work with reference to FIG. 7B. FIG. 7B is a diagram illustrating another example of behavior in the agitation work.

As illustrated in FIG. 7B, the robot 2 can shake the glass 11 by swinging not only the first arm portion 21 but also the second arm portion 22. More specifically, the robot 2 swings the second arm portion 22 about the third rotation axis A3 while swinging the first arm portion 21 about the second rotation axis A2 going through the posture in which the distance from the base end of the second arm portion 22 to the distal end of the first arm portion 21 is maximized.

Consequently, the glass 11 held by the end effector 50L is swiveled, as illustrated in FIG. 7B, so as to draw a circle. Thus, as compared with the case of shaking the glass 11 by swinging only the first arm portion 21 as illustrated in FIG. 7A, the force of agitation can be increased.

Furthermore, the robot 2 performs the behavior of swivelling the glass 11 so as to draw a circle by swinging the first arm portion 21 and the second arm portion 22, which supports the first arm portion 21. More specifically, the two arm portions to swing are continuous, in other words, no other arm portion is interposed between the two arm portions to swing, and thus the robot 2 can perform the behavior of shaking the glass 11 in a small movement. Consequently, even when a working area is relatively narrow, the robot 2 can easily perform the work of swiveling an object so as to draw a circle.

The robot 2 may further rotate the end effector 50L about the first rotation axis A1 while swinging the first arm portion 21 and the second arm portion 22. This can further increase the force of agitation.

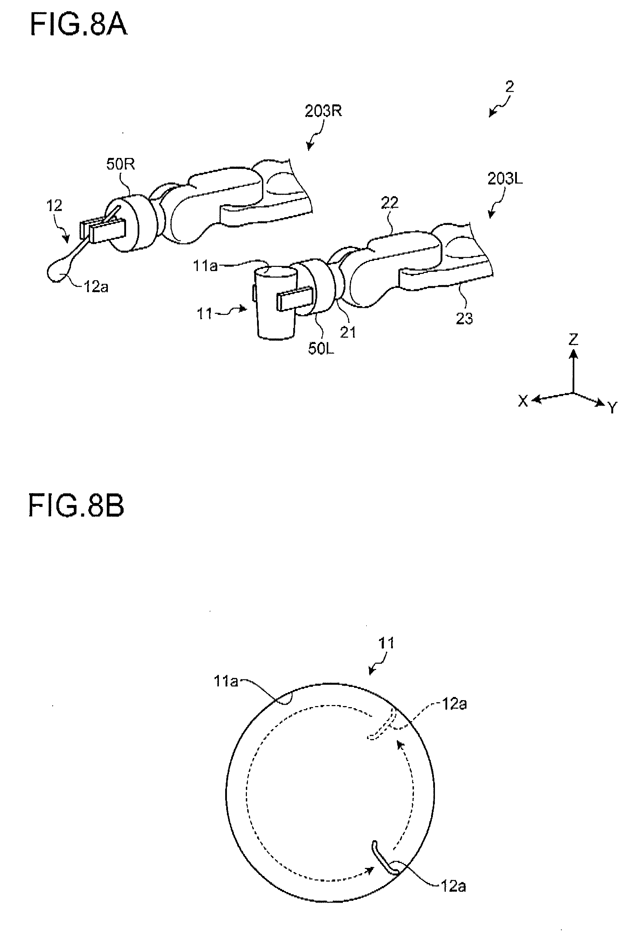

Next, the "scraping work" will be described with reference to FIGS. 8A and 8B. FIGS. 8A and 8B are diagrams illustrating an example of behavior in the scraping work. The "scraping work" is the work of scraping off deposit adhering to the inner wall of the glass 11 by using the stirrer 12.

As illustrated in FIG. 8A, the robot 2 holds the glass 11 by using the end effector 50L of the left arm 203L, and holds the stirrer 12 by using the end effector 50R of the right arm 203R. The robot 2, as described with reference to FIG. 5, accesses the glass 11 from the horizontal direction and holds the glass 11 in a state in which the first arm portion 21 and the second arm portion 22 are in a straight line. The same applies to the holding work of the stirrer 12 by the right arm 203R.

The stirrer 12 includes a scoop portion 12a at the distal end thereof. The robot 2 scrapes off deposit adhering to the inner wall 11a of the glass 11 by using the scoop portion 12a.

The robot 2 first drives the right arm 203R and brings the side surface of the scoop portion 12a of the stirrer 12 into contact with the inner wall 11a of the glass 11. At this time, the robot 2 drives the left arm 203L and changes the angle of the glass 11, thereby making it easier to bring the scoop portion 12a into contact with the inner wall 11a.

Subsequently, the robot 2 rotates the stirrer 12 so as to draw a circle by driving the whole of the wrist portion of the right arm 203R. More specifically, the robot 2 swings the first arm portion of the right arm 203R about the second rotation axis and swings the second arm portion of the right arm 203R about the third rotation axis while going through the posture in which the distance from the base end of the second arm portion to the distal end of the first arm portion is maximized. The robot 2 further rotates the end effector 50R about the first rotation axis.

Consequently, as illustrated in FIG. 8B, the scoop portion 12a of the stirrer 12 held by the end effector 50R moves along the inner wall 11a of the glass 11, and thus the deposit adhering to the inner wall 11a of the glass 11 is scraped off by the scoop portion 12a.

Thus, by driving the whole of the wrist portion of the right arm 203R to swivel the stirrer 12 so as to draw a circle, the robot 2 can scrape off the deposit adhering to the inner wall 11a of the glass 11 with the scoop portion 12a of the stirrer 12.

Furthermore, the robot 2 has been defined as a dual-arm robot including the two arms 203L and 203R, and holding the stirrer 12 by the end effector 50R of the right arm 203R and holding the glass 11 by the end effector 50L of the left arm 203L. Consequently, the angle of the glass 11 can be changed by using the left arm 203L such that the movement of the right arm 203R becomes minimum, and thus the movement of the robot 2 can be made smaller.

The robot 2 may perform the work of making the distal end of an elongated member that does not have the scoop portion 12a (for example, a stirring rod) move along the inner wall 11a of the glass 11, for example.

While it has been exemplified here that the robot 2 holds the glass 11 by the end effector 50L of the left arm 203L and holds the stirrer 12 by the end effector 50R of the right arm 203R, the arms 203L and 203R that hold the glass 11 and the stirrer 12, respectively, may be opposite to that in the first embodiment.

As in the foregoing, the robot system 1 in the first embodiment includes the robot 2 including the arms 203L and 203R, and the work table 3. On the work table 3, placed are objects to be used for the work performed by the robot 2 by using the arms 203L and 203R.

The arms 203L and 203R of the robot 2 each include the first arm portion 21, the second arm portion 22, and the third arm portion 23. The first arm portion 21 supports the end effector 50L or 50R to be rotatable about the first rotation axis A1 at the distal end thereof. The second arm portion 22 supports the base end of the first arm portion 21 to be swingable about the second rotation axis A2, which is perpendicular to the first rotation axis A1. The third arm portion 23 supports the base end of the second arm portion 22 to be swingable about the third rotational axis A3, which is perpendicular to the second rotation axis A2.

Consequently, even in situations that include many steps of the behavior (work) in which correction or the like for singularity avoidance is required for the RBT robot, the robot system 1 in the first embodiment requires no such correction and can reduce the disadvantages of singularity avoidance.

### Second Embodiment

In the above-described first embodiment, exemplified have been the situations of the robot 2 to perform the work such as "delivery work", "agitation work", and "scraping work". The work performed by the robot 2, however, is not limited to the foregoing. For example, the robot 2 may perform polishing work of a member having vertical surfaces such as walls.

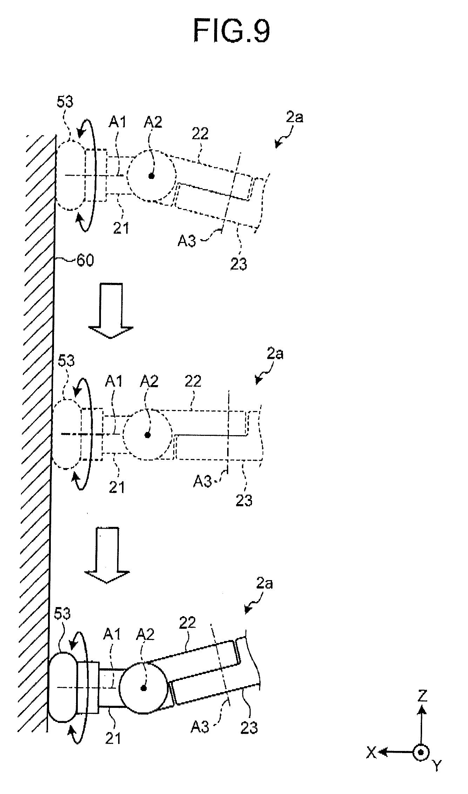

The following describes another example of the work performed by the robot with reference to FIG. 9. FIG. 9 is a diagram illustrating an example of behavior performed by a robot according to a second embodiment. Note that, in the following description, the same portions as those already described are given the same reference numbers or symbols as those already described, and the redundant explanations are omitted.

As illustrated in FIG. 9, a robot 2a in the second embodiment includes an end effector 53 in place of the end effectors 50L and 50R of the robot 2 in the first embodiment. The end effector 53 is a polisher, is supported by the first arm portion 21 in a direction in which a polishing surface is perpendicular to the first rotation axis A1, and rotates about the first rotation axis A1.

The robot 2a rotates, after having brought the polishing surface of the end effector 53 into contact perpendicularly with a vertical surface of a processed product 60, the end effector 53 about the first rotation axis A1.

While the end effector 53 is kept in a state of rotating, the robot 2a moves the first arm portion 21 and the second arm portion 22 vertically downward and polishes the processed product 60. At this time, the robot 2a moves the first arm portion 21 and the second arm portion 22 vertically downward while swinging the first arm portion 21 about the second rotation axis A2 such that the polishing surface of the end effector 53 is maintained in a state of being perpendicular to the vertical surface of the processed product 60.

As a result, the robot 2a goes through a state in which the first arm portion 21 and the second arm portion 22 are in a straight line, that is, the posture in which the distance from the base end of the second arm portion 22 to the distal end of the first arm portion 21 is maximized.

In the robot 2a, as with the robot 2 in the first embodiment, the posture in which the distance from the base end of the second arm portion 22 to the distal end of the first arm portion 21 is maximized is not a singularity posture. Consequently, even when performing the polishing of the vertical surface of the processed product 60 while going through a state in which the first arm portion 21 and the second arm portion 22 are in a straight line, the robot 2a does not need to avoid the singularity posture and can perform the polishing in a given direction.

While the robots 2 and 2a have been exemplified as a dual-arm 7-axis robot in the respective embodiments in the foregoing, the robots only need to include at least the first to the third arm portions 21 to 23, and thus the robots may be in other configurations such as a single-arm robot or a robot with six or fewer axes. Furthermore, the content of work performed by the robots 2 and 2a is not limited to the foregoing.

The structure of the first to the third arm portions 21 to 23 may be applied to a parallel link robot. The parallel link robot, in general, is a robot that includes a parallel link mechanism in which a pair of oppositely disposed members with a given distance (here, a member on the base end side is referred to as a "base member" and a member on the distal end side is referred to as a "movable member") are coupled in parallel by a plurality of links. The first to the third arm portions 21 to 23 in the foregoing may be used for movable members of such a parallel link robot.

Further effects and modifications can easily be derived by those skilled in the art. Thus, a broader aspect of the present invention is not limited to the specific details and representative embodiments as expressed and described above. Therefore, various modifications can be made without departing from the spirit and scope of the comprehensive concept of the invention defined by the accompanying claims and the equivalents thereof.

### Reference Signs List

- 1: robot system
- 2, 2a: robot
- 201: base
- 202: body portion
- 203L: left arm
- 203R: right arm
- 21: first arm portion
- 21a: distal end
- 22: second arm portion
- 22a: joint portion
- 23: third arm portion
- 23a: joint portion
- 50L, 50R, 53: end effector
- 3: work table
- 31: top plate
- 32: shelf
- 32a, 32b: storage space
- 4: control device
- 40: cable
- A1: first rotation axis
- A2: second rotation axis
- A3: third rotation axis
- 11: glass
- 12: stirrer

## Claims

1. A robot system comprising:
a robot including an arm; and
a work table on which an object used for work performed by the robot by using the arm is placed, wherein
the arm of the robot includes:
a first arm portion that supports an end effector to be rotatable about a first rotation axis at a distal end thereof,
a second arm portion that supports a base end of the first arm portion to be swingable about a second rotation axis that is perpendicular to the first rotation axis, and
a third arm portion that supports a base end of the second arm portion to be swingable about a third rotation axis that is perpendicular to the second rotation axis.

2. The robot system according to claim 1, further comprising:
a control device that controls the robot, wherein
the control device instructs the robot to perform work in postures including a posture in which a distance from the base end of the second arm portion to the distal end of the first arm portion is maximized.

3. The robot system according to claim 1 or 2, wherein the arm further includes:
a fourth arm portion that supports a base end of the third arm portion to be swingable about a fourth rotation axis that is perpendicular to the third rotation axis,
a fifth arm portion that supports a base end of the fourth arm portion to be rotatable about a fifth rotation axis that is perpendicular to the fourth rotation axis, and
a sixth arm portion that supports a base end of the fifth arm portion to be swingable about a sixth rotation axis that is perpendicular to the fifth rotation axis, and
the robot further includes a base portion that supports a base end of the sixth arm portion to be rotatable about a seventh rotation axis that is perpendicular to the sixth rotation axis.

4. The robot system according to claim 3, wherein the robot further includes:
a body portion that is the base portion common to two of the arms, and
a base that supports the body portion to be rotatable about a vertical axis.

5. The robot system according to any one of claims 2 to 4, wherein the work is work of performing delivery of the object between the work table and the end effector while going through a posture in which a distance from the base end of the second arm portion to the distal end of the first arm portion is maximized.

6. The robot system according to any one of claims 2 to 4, wherein
the work table includes a shelf that stores therein the object in multiple stages, and
the work is work of performing delivery of the object between the shelf and the end effector while going through a posture in which a distance from the base end of the second arm portion to the distal end of the first arm portion is maximized.

7. The robot system according to claim 6, wherein the work further includes work of rotating the object held by the end effector by rotating the end effector about the first rotation axis in the posture in which a distance from the base end of the second arm portion to the distal end of the first arm portion is maximized.

8. The robot system according to any one of claims 2 to 4, wherein the work is work of shaking the object held by the end effector by swinging the first arm portion about the second rotation axis in a positive direction and in an opposite direction while going through a posture in which a distance from the base end of the second arm portion to the distal end of the first arm portion is maximized.

9. The robot system according to any one of claims 2 to 4, wherein the work is work of rotating the object held by the end effector so as to draw a circle by swinging the first arm portion about the second rotation axis while going through a posture in which a distance from the base end of the second arm portion to the distal end of the first arm portion is maximized and swinging the second arm portion about the third rotation axis.

10. The robot system according to any one of claims 2 to 4, wherein the work is work of moving an elongated member that is the object held by the end effector along an inner wall of a container by swinging the first arm portion about the second rotation axis while going through a posture in which a distance from the base end of the second arm portion to the distal end of the first arm portion is maximized and swinging the second arm portion about the third rotation axis, and further rotating the end effector about the first rotation axis.

11. The robot system according to claim 10, wherein
the robot is a dual-arm robot that includes two of the arms,
the elongated member is held by the end effector of one of the arms, and
the container is held by the end effector of the other of the arms.

12. A method for manufacturing a processed product, the method comprising:
holding, by a robot, an object placed on a work table by using an end effector, the robot having an arm including a first arm portion that supports the end effector to be rotatable about a first rotation axis at a distal end thereof, a second arm portion that supports a base end of the first arm portion to be swingable about a second rotation axis that is perpendicular to the first rotation axis, and a third arm portion that supports a base end of the second arm portion to be swingable about a third rotation axis that is perpendicular to the second rotation axis; and
processing, by the robot, the object by performing work, in postures including a posture in which a distance from the base end of the second arm portion to the distal end of the first arm portion is maximized, on the object held by the end effector.
